# EUROPEAN PATENT SPECIFICATION

(11) **EP 3 437 029 B1**
(45) Date of publication and mention of the grant of the patent: **02.03.2022**
(21) Application number: 17719023.8
(22) Date of filing: 20.03.2017
(51) Int. Cl.: G06N 3/00, B25J 11/00, A63H 13/00, B25J 19/02

(54) **CUSTOMIZATION OF ROBOT**
ANPASSUNG EINES ROBOTERS
PERSONNALISATION DE ROBOT

(30) Priority: 29.03.2016 SE 1650402
(43) Date of publication of application: 06.02.2019
(73) Proprietor: Furhat Robotics AB, 115 50 Stockholm (SE)
(72) Inventor: AL MOUBAYED, Samer, 115 50 Stockholm (SE); BESKOW, Erik Jonas, 163 54 Spånga (SE); SKANTZE, Gabriel Lars Patrik, 124 32 Bandhagen (SE); WIK, Preben, 184 51 Österskär (SE)
(74) Representative: AWA Sweden AB
(86) International application number: PCT/SE2017/050263
(87) International publication number: WO 2017/171610

(56) References cited:
- FR-A1- 3 012 227
- KR-A- 20130 101 201

## Description

### TECHNICAL FIELD

The present invention relates to a robot comprising a robot head configured for connection to a face part including a display surface for the display of a face image depicting a face of said robot. The invention also relates to a method and a computer program for customizing such a robot.

### BACKGROUND

The invention pertains to the field of robotics. More specifically, the invention pertains to the field of social robots capable of interacting and communicating with humans or other automated machines by following social behaviours and rules attached to its role.

Furhat^{®} from Furhat Robotics AB and RoboThespian and Socibot from Engineered Arts Ltd are all examples of social robots. These robots comprise at least one display surface for displaying an image depicting a face or a part of a face of the robot. The displayed image may be a computer generated face animation which is synchronized with the speech of the robot to give a user the sensation of a talking robot head.

A commonly used technique is to project the face animation onto a projection surface of a translucent mask, constituting the face or a face part of the robot. The projection surface is typically a three-dimensional (3D) surface and, for proper projection of the face animation onto the projection surface, the facial characteristics of the face animation should be adapted to the shape of the 3D projection surface. The face animation may depict a human face, an animal face or the face of a fictional character. Typically but not necessarily, the face animation is a 3D animation, the shape of which is adapted to 3D shape of the display surface. Robot systems using such or similar projective techniques for displaying animated robot faces are further described in e.g. US 8256904, 2002/0015037, FR 3012227 and T.Kuratate, Y.Matsusaka, B.Pierce, G. Cheng, "'Mask-Bot' - a life-size robot head using talking head animation for human-robot communication", 2011 IEEE-RAS International Conference on Humanoid Robots, Bled, Slovenia, October 26-28, 2011.

Another suitable technique for 3D animation of robot faces, which is likely to be more widely used in the future, is the display of a face animation on a 3D shaped electronic display unit, e.g. a LED or LCD display.

An advantage of implementing the face of the robot at least partly in form of an animation which is displayed on a display surface of the robot head is that the visual appearance of the robot can be readily changed and customized simply by changing the face animation. However, in order for the face of the robot to appear realistic and to create the perception that the face is not projected but rather is physically moving, the facial characteristics of the animated face must correspond to the 3D shape of the display surface on which the face animation is displayed. Therefore, the degree of customization of the visual appearance of this type of robot is limited.

Furthermore, there is often a desire to customize not only the visual appearance of a social robot but also the behaviour and/or the interactive skills of the robot in dependence of the context in which the robot is to operate. For example, it may be desirable to make the robot behave in a certain way and have certain interactive skills when the robot is operating as an educator or presenter of information at a seminar or a conference, and to behave differently and possess other interactive skills when operating as an information receptionist or front desk clerk.

The visual appearance of the robot, including the face animation, can be said to form a part of the robot's identity, while the behaviour and interactive skills of the robot can be said to form part of the robot's personality. Changing the robot identity and/or the robot personality of social robots of today typically requires reprogramming of the robot or at least knowledge and use of computers and computer programs.

### SUMMARY

It is an object of the present invention to facilitate the process of customizing a robot.

It is another object of the present invention to present a solution allowing a robot to be customized by changing any or both of the robot identity and the robot personality in an easy, intuitive and user-friendly manner.

These and other objects are achieved by a robot system, method and computer program defined by the appended claims.

According to one aspect of the present disclosure there is provided a robot, e.g. in form of a talking robot head or a full-body robot, configured to exhibit a robot identity and/or a robot personality at least partly through execution of computer-readable program code, meaning that the robot is configured to execute program code sequences causing the robot to exhibit characteristics associated with an identity and/or a personality of the robot. The robot comprises a robot head configured for connection to a face part including a display surface on which the robot is configured to cause the display of a face image depicting a face of said robot, which face image forms a part of said robot identity. The robot head is configured for detachable connection to said face part in order to allow a user of the robot to easily attach different face parts to the robot head. The robot is further configured to automatically adapt said robot identity and/or robot personality based on the face part currently being connected to the robot head, causing the robot to exhibit a robot identity and/or a robot personality which at least to some extent is automatically selected in dependence of said face part.

This automatic face-part dependent adaption of the robot identity and/or the robot personality facilitates customization of the robot since a user of the robot can "program" or "reprogram" the identity and/or personality of the robot simply by attaching a face part to the robot head. It also enables a user of the robot to easily change the identity and/or personality of the robot by replacing the face part currently connected to the robot head with another face part, without the need for any advanced hardware, software or electronics. Since the face of a character is strongly associated with the character's identity, the proposed solution allowing the robot identity and/or personality to be determined in dependence of a replaceable robot part constituting the face of the robot is both intuitive and user friendly.

Adapting the robot identity and/or robot personality herein means adaption of at least one robot characteristic of the robot identity and/or robot personality. The robot is configured to adapt said at least one robot characteristic through execution of a computer-readable program code sequence which is automatically selected in dependence of the face part currently being connected to the robot head.

Said at least one robot characteristic may be any software-controlled characteristic of the robot identity and/or the robot personality. Non-exclusive examples of software-controlled robot characteristics forming part of the robot identity within the meaning of the present disclosure are the above mentioned face image of the robot and the voice of the robot. Likewise, non-exclusive examples of software-controlled robot characteristics forming part of the robot personality within the meaning of the present disclosure are the behaviour of the robot, including the way the robot interacts with humans or other automated machines (social behaviour) and the way the robot moves (e.g. head and eye movements), as well as the skills of the robot, including its capability of interacting with humans or other automated machines (interactive skills), its knowledge base, and its capability of providing answers to questions.

Preferably, the at least one characteristic of the robot identity and/or personality that is automatically adapted based on the face part currently being connected to the robot head comprises at least said face image depicting the face of the robot. This means that the robot is configured to cause display of a face image depicting a face of the robot on the display surface of the face part, which face image is automatically selected in dependence of the face part currently being connected to the robot head.

The face image may be a 2D or 3D animation and is preferably an animation of a human face, an animal face or the face of a fictional character. Most preferably, the face image is a 3D face animation.

Preferably the display surface of the face part is a 3D display surface on which the robot is configured to cause the display of a face animation, typically in form of an anthropomorphic face. As mentioned above, in order for the face animation to appear realistic on a 3D display surface, the face animation should be tailored to the shape of the 3D display surface. Thus, the ability of the robot to automatically select the face image to be displayed on the display surface based on the face part currently connected to the robot head serves the double purpose of allowing a user to easily change the visual appearance and hence the identity of the robot by changing face part while at the same time ensuring proper mapping of the face image of the new robot identity onto the display surface of the new face part. Thus, in this scenario, not only is the robot configured to adapt the robot identity and/or personality based on the currently connected face part, the robot is indeed configured to adapt the robot identity to said face part to ensure correspondence between the face animation constituting the face of the robot and the 3D display surface on which the animation is displayed. Furthermore, by allowing not only the face animation of the robot but also the 3D shaped display surface to be easily changed by the user, a bigger change in the visual appearance of the robot can be achieved compared to a scenario in which only the face animation can be changed since, for a realistic result, the facial characteristics of the face animation cannot deviate too much from the 3D shape of the display surface. Therefore, changing the face part allows for a bigger change in the visual appearance of the face animation while still ensuring a realistic result.

Preferably, the robot is configured to automatically adapt characteristics of both said robot identity and said robot personality based on the face part currently being connected to the robot head. For example, the robot may be configured for face-part dependent adaption of any or both of the face image and the voice of the robot, pertaining to the robot identity, and any or both of the behaviour and the skills of the robot, pertaining to the robot personality. In this way a user can easily change both the identity and personality of the robot and so be presented with a completely new robotic character on the fly, simply by changing the detachable face part of the robot.

It is contemplated by the present invention that a buyer or user of the robot may be provided with a plurality of different face parts, each associated with a robotic character having a unique robot identity and/or robot personality. The buyer or user is then able to switch between the robotic characters by simply switching the face part of the robot.

Identification of the face part currently being connected to the robot head may be performed by the robot either automatically or based on information that is manually input to the robot by a user thereof, which information allows the robot to identify said face part. In embodiments in which identification of the face part is allowed to be made by the robot based on information manually input by the user, it is important to make sure that the manually input information is correct to ensure that the robot identity and/or personality that is automatically exhibited by the robot in response to the identification of the face part is intended and designed for the face part currently connected to the robot head. Therefore, the information that may be manually input by the user for face-part identification by the robot should preferably be information that is found on the face part itself, or a box or casing in which the face part is delivered to the user, such as an identification number that is printed or labelled on the face part or its casing.

In some embodiments, the robot may form part of a robot system configured to present a user of the robot with a user interface through which the user can input information to the robot. In this scenario, the user may input information related to the face part currently connected to the robot head via said user interface, e.g. said identification number being printed or labelled on the face part or its casing, whereby the robot may be configured to retrieve and use said information to identify the face part, and to automatically adapt the robot identity and/or personality based on the thus identified face part.

Preferably, however, the robot is configured for fully automatic adaption of the robot identity and/or robot personality based on the currently connected face part, without any input from the user of the robot.

To this end, the robot may comprise a communication unit being a face part communicating unit configured to receive data from the face part that is currently connected to the robot head. In some embodiments, the data that is received from the face part comprises the computer-readable program code sequence which, when executed by the robot, causes the face-part dependent adaption of the robot identity and/or personality. In other embodiments, the data that is received from the face part do not comprise the actual program code sequence for adaption of the robot identity and/or personality but information enabling the robot to retrieve said program code sequence from another source. For example, as will be described in more detail below, the data received from the face part may comprise a face part identifier enabling the robot to retrieve the program code sequence for face-part dependent adaption of the robot identity and/or personality from an internal memory of the robot or from an external network device to which the robot is communicatively connectable. In both cases, the robot is configured to automatically adapt its robot identity and/or robot personality based on the face part currently connected to the robot head by using data received from the face part itself.

In one exemplary embodiment, said communication unit comprises a sensor arrangement for automatic identification of the face part currently being connected to the robot head. Automatic identification of the face part may be achieved by means of the sensor arrangement through retrieval of a face part identifier from a data carrier of the face part, preferably a passive data carrier. In some embodiments, the sensor arrangement may comprise an RFID reader configured to read information, such as said face part identifier, from a data carrier in form of an RFID tag attached to the face part. The robot may then automatically identify the face part based on said face part identifier and automatically adapt the robot identity and/or robot personality based on the thus identified face part. In this embodiment, the sensor arrangement is hence configured for radio-based identification of the face part. In other embodiments, the sensor arrangement may be configured to use other known technologies for identification of the face part, such as optical identification of a barcode or one or more characters of the face part. The data carrier of the face part may hence be any element allowing the robot to automatically identify the face mask when connected to the robot head.

Thus, in this embodiment, the robot comprises a sensor arrangement for automatic identification of a face part currently being connected to the robot head, the robot being configured to automatically adapt said robot identity and/or said robot personality based on the face part being identified by the sensor arrangement.

As understood from above, the program code sequence that is executed by the robot to adapt the robot identity and/or personality to the face part currently being connected to the robot head may be pre-stored in an internal memory of the robot or retrieved by the robot from an external source, which external source may be the face part itself or a network device to which the robot is communicatively connectable, as will be discussed below.

In some embodiments, the robot may comprise connectivity for communication with at least one network device, e.g. a remote server to which the robot is communicatively connectable via the Internet or another network. In this scenario, the robot may be configured to retrieve said program code sequence from said network device using the above mentioned face part identifier. When executed by the robot, the retrieved program code sequence causes the face-part dependent adaption of the robot identity and/or robot personality. Said at least one network device may form part of the above mentioned robot system. This means that the robot system may comprise at least one network device configured to receive, from the robot, a face part identifier identifying the face part currently being connected to the robot head, and to transmit, to the robot, a program code sequence selected in dependence of the face part identifier, which program code sequence, when executed by the robot, causes the robot identity and/or robot personality to be adapted in dependence of said face part.

In embodiments in which the robot is configured to retrieve the program code sequence causing the face-part dependent adaption of the robot identity and/or robot personality from the face part itself, said communication unit may comprise a data receiving unit for receiving said program code sequence from the face part when the face part is brought in the proximity of, or connected to, the robot head. For example, the data receiving unit may be constituted by said RFID reader being configured to retrieve from the face part said program code sequence instead of, or in addition to, said face part identifier. However, if said program code sequence comprises a large amount of data, other technologies for retrieving the program code sequence from the face part may be more suitable. For example, the face part may be equipped with a data carrier in form an SD card whereas the data receiving unit of the robot comprises an SD card reader. The connection interface for establishment of the detachable connection between the robot head and the face part may then be arranged such that the SD card of the face part becomes communicatively connected to the SD card reader of the robot when the face part is brought into said detachable connection with the robot head.

An advantage of embodiments in which the robot is configured to retrieve only a face part identifier from the face part while retrieving the program code sequence for causing the face-part dependent adaption of the robot identity and/or personality from a network device is, of course, that neither the face part nor the robot itself needs to carry large amounts of data. On the other hand, embodiments in which the program code sequence for causing the face-part dependent adaption of the robot identity and/or personality is retrieved directly from the face part upon detachable connection thereof to the robot head, or from an internal memory of the robot, are advantageous in that the adaption of the robot identity and/or robot personality can be effectuated without the need for network connection of the robot, or even without the need for network connectivity of the robot.

The robot may be a projective robot, meaning that the robot comprises a projector and is configured to cause the display of the face image on the display surface of the face part through projection of a face image onto a projection surface of a translucent mask constituting said face part. Preferably the robot is a rear-projection robot, meaning that the robot is configured to project the face image onto a backside of said translucent mask, allowing the projector to be arranged behind the face part from a user's point of view.

In other embodiments, the robot may be configured to cause the display of the face image on a display surface of an electronic display unit, such as an LED or LCD display, or a fibre-optic display unit, which electronic or fibre-optic display unit constitutes or is comprised in the face part being detachably connectable to the robot head. Preferably, the electronic or fibre-optic display unit is a 3D shaped display unit on which the robot is configured to cause the display of a face image in form of 3D animation adapted to the 3D shape of the display unit.

As mentioned above, automatic adaption of at least one characteristic of the robot identity and/or the robot personality based on the face part currently connected to the head of the robot should herein be interpreted as if the robot identity and/or robot personality at least to some extent is automatically selected in dependence of the face part currently being connected to the robot head. In some embodiments, the robot identity and/or robot personality may partly be automatically selected in dependence of the currently connected face part, and partly be manually selected by a user of the robot. For example, the automatic face-part dependent selection of robot characteristics may be a first automated selection in a selection process for selecting a robot identity and/or robot personality of the robot. Said selection process may further comprise a second selection in which the user of the robot is allowed to manually select which characteristics of the robot identity and/or robot personality should be exhibited by the robot, which second selection is limited to the face-part dependent characteristics selected in said first selection. In this way, the robot can prevent the user from selecting characteristics of the robot identity and/or robot personality which, for one reason or another, are not deemed suitable for use with the face part currently being attached to the robot head. Thus, in these embodiments, the robot is configured to perform a filtering step in response to identification of a face part being connected to the robot head. The filtering step involves automatic filtering-out of robot characteristics which are incompatible with the identified face part, including the filtering-out of robot characteristics pertaining to the robot identity and/or robot personality. The robot may further be configured to enable the user to select identity and/or personality for the robot by allowing the user to select characteristics pertaining to the robot identity and/or robot personality from the filtered set of robot characteristics.

The above described selection process may for example be initiated by the robot upon attachment of a face part to the robot head. When the robot has identified the attached face part, it may be configured to perform said first automated selection of face-part dependent robot characteristics, as described above. The robot may then cause a user of the robot to be presented with a graphical user interface allowing the user to manually perform said second selection by presenting, via said user interface, the robot characteristics of said first selection. In some embodiments, the robot may be configured to cause said graphical user interface to be presented on an external display unit of the robot. In other embodiments, the robot may be configured to communicate information relating to the identified face part to a network device to which the robot is communicatively connected, and to cause said graphical user interface to be presented on a client device of a user running an application having access to the information provided by the robot to the network device. The network device may form part of the above mentioned robot system of the present invention.

The above described semi-automatic selection process of a robot identity and/or robot personality to be exhibited by the robot is advantageous in that it ensures compatibility and correspondence between the robot identity and/or robot personality and the face part currently connected to the robot, while still allowing the user to participate in the process of customizing the robot. For example, it may be advantageous in a scenario wherein a face part having a 3D shaped display surface is connected to the robot head, and wherein some of several available face animations are suitable for use with the connected face part. In this scenario, the robot may first perform an automatic face-part dependent selection of face animations that are suitable for use with the connected face part among the available face animations, i.e. the face animations having facial characteristics adapted to the 3D shape of the display surface of the face part. The thus selected face animations are part of the robot characteristics of the first selection. The user may then be presented with a graphical user interface showing only the face animations of the first selection, allowing the user to perform said second selection by selecting which one of said face animations should be displayed by the robot on the display surface of the face part.

According to another aspect of the present disclosure there is provided a face part configured for connection to a head of a robot, the face part comprising a display surface on which the robot is configured to cause the display of a face image depicting a face of said robot, the face part being configured for detachable connection to the robot head to allow detachable connection of different face parts to said head, wherein said face part comprises a data carrier storing a face part identifier enabling the robot to identify said face part by reading said face part identifier.

According to yet another aspect of the present disclosure there is provided a face part configured for connection to a head of a robot, the face part comprising a display surface on which the robot is configured to cause the display of a face image depicting a face of said robot, the face part being configured for detachable connection to the robot head to allow detachable connection of different face parts to said head, wherein said face part comprises a data carrier storing a program code sequence for adapting a robot identity and/or a robot personality of the robot based on said face part, the face part being configured to transmit said program code sequence to the robot when the face part is brought in the proximity of, or connected to, the robot head.

According to yet another aspect of the present disclosure there is provided a robot system comprising a robot and at least one face part as described above. Preferably, the robot system comprises at least two mutually different face parts allowing a user of the robot system to change at least one characteristic of the robot identity and/or robot personality by replacing the face part currently connected to the robot head with another face part. In accordance with the above described principles, the robot is configured to automatically change the robot identity and/or the robot personality in response to a change of face part from a first face part to a second and different face part. In particular, the robot is configured to automatically change the face image depicting a face of the robot from a first face image to a second face image being different than said first face image, in response to a change between said face parts.

The robot system may further comprise a user interface allowing the user to input information to the robot, e.g. face part information allowing the robot to identify the face part currently connected to the robot head, and/or information related to the above mentioned second selection of user-selected characteristics of the robot identity and/or robot personality. As also mentioned above, the robot system may further comprise at least one network device which may store program code sequences that are downloadable by the robot in order to effectuate the face-part dependent adaption of the robot identity and/or personality. The at least one network device may further comprise functionality, e.g. a server-side application, for presenting said user interface on a client device of the user. Said network device may include one or more of an application server, a web server, a database server and a data storage server.

According to yet another aspect of the present disclosure there is provided a method for customizing a robot configured to exhibit a robot identity and/or a robot personality at least partly through execution of computer-readable program code, the robot comprising a robot head configured for connection to a face part including a display surface on which the robot is configured to display a face image depicting a face of said robot, wherein the robot head is configured for detachable connection to said face part to allow detachable connection of different face parts to the robot head, the method comprising a step of automatically adapting said robot identity and/or robot personality based on the face part currently being connected to the robot head.

The method may further comprise additional method steps corresponding to any of, or any combination of, the above described actions performed by the various parts of the robot system.

The method is a computer-implemented method which is performed through execution of a computer-readable program code sequences. Thus, according to yet another aspect of the present disclosure there is provided a computer program for customizing a robot configured to exhibit a robot identity and/or a robot personality at least partly through execution of computer-readable program code, the robot comprising a robot head configured for connection to a face part including a display surface on which the robot is configured to display a face image depicting a face of said robot, wherein the robot head is configured for detachable connection to said face part to allow detachable connection of different face parts to the robot head, the computer program comprising computer-readable program code which, when executed by the robot, causes said robot identity and/or robot personality to be automatically adapted based on the face part currently being connected to the robot head.

The computer program may further comprise computer-readable code which, when executed by the robot, causes any of, or any combination of, the above mentioned actions to be performed by the robot. As clear from the above description of the robot system, the computer program may be a computer program stored in an internal memory of the robot or a distributed computer program additionally comprising computer program components residing in one or more network devices to which the robot is communicatively connectable.

According to yet another aspect of the present disclosure there is provided a computer program product comprising a non-volatile memory storing the above mentioned computer program, or at least one of the above mentioned computer program components.

As briefly discussed above, the robot of the present disclosure may be advantageously used for telepresence applications. The capability of the robot head of permitting different face parts to be detachably connected thereto, and the robot's capability of automatically adapting the robot identity and/or robot personality based on the face part currently connected to the robot head, are features that are advantageous but not required in order for the robot to provide telepresence functionality.

According to one aspect of the present disclosure, there is provided a telepresence robot for providing telepresence of a remote user collocated with a camera recording face images of said remote user and/or a microphone recording the voice of said remote user. The robot comprises a robot head configured for connection to a face part including a display surface, and preferably a 3D display surface. The robot is configured to cause the display of images depicting a face of the robot on said display surface based on the face images and/or the voice of the remote user. Thereby, the robot can provide telepresence of said remote user at the location of the robot.

In one embodiment, the robot face images that are displayed on the display surface of the face part are images of the remote user, preferably real time or near real time images of the remote user generated through processing of the recorded face images of the remote user by the robot or a network device to which the robot is communicatively connectable. Typically, such processing involves removal of background information, adaption of the size of the recorded images to the display surface of the face part, etc.

In another embodiment, the robot face images that are displayed on the display surface of the face part are images of an animated face mimicking facial expressions of said remote user. The facial expressions of the animated face may be generated based on facial expressions of the remote user, as captured by said camera, or be generated based on the voice of the remote user, as recorded by said microphone. The face animation may be generated by the robot or a network device to which the robot is communicatively connected. As mentioned above, such a face animation may be generated from recorded images by using known techniques for detection of faces, direction of gaze, emotions, speech-related face movements etc. The face animation is preferably a 3D animation which may be a 3D animation specifically adapted to visually resemble the remote user, or a 3D animation of an avatar of the remote user, which avatar may have a visual appearance that is very different from the visual appearance of the remote user.

In accordance with the robot described above, the robot head of the telepresence robot may be configured for detachable connection to said face part to allow detachable connection of different face parts to the robot head.

In one telepresence application utilizing the possibility of detachably connecting different face parts to the robot head, the robot may be configured to display the robot face images not only based on recorded images and/or a recorded voice of a remote user but also based on the face part currently being connected to the robot head. This provides the above described functionality of allowing a user, such as an administrator of a business meeting, to easily configure the robot to "turn into" one of several remote meeting participants by connecting a face part associated with said remote participant to the robot head. This functionality may be referred to as "selective telepresence" since the robot is configured to provide selective telepresence of one of a plurality of remote users based on the face part currently connected to the robot head. The functionality of the robot of automatically selecting the face image to be displayed on the display surface of the face part based on the face part currently being connected to the robot head also has the effect of preventing the display of the face of a remote user on the display surface of a face part that is not designed for that particular user. Furthermore, the robot or a network device to which the robot is connected may be configured to adapt the face image of the remote user to the face part currently being connected to the robot head. This has the effect of minimizing any discrepancies between the facial characteristics of the remote user to be put on display and the display surface of the face part currently being connected to the robot head.

This means that the robot may be configured to provide telepresence to one of a plurality of remote users, each collocated with a camera recording face images of the remote user and/or a microphone recording speech of the remote user. The robot is configured to select which remote user to provide telepresence to based on the face part currently being connected to the robot head, meaning that the robot is configured to cause at least the face image that is displayed on the display surface of the face part to be selected in dependence of the currently connected face part. Preferably, the telepresence robot is also configured to output sound that is selected based on the currently connected face part. In this way, the telepresence robot becomes capable of reproducing any or both of the facial expressions and speech of one of a plurality of remote users, selected in dependence of the face part currently being connected to the robot head.

More advantageous aspects of the robot, robot system, face part, method, computer program and computer program product will be described in the detailed description of embodiments following hereinafter.

### BRIEF DESCRIPTION OF THE DRAWINGS

The present invention will become more fully understood from the detailed description following hereinafter and the accompanying drawings which are given by way of illustration only. In the different drawings, same reference numerals correspond to the same element.
Fig. 1 illustrates a side view of a robot according to an exemplary embodiment of the present disclosure, as well as a face part which is detachably connectable to a head part of the robot;
Fig. 2 illustrates the robot of Fig. 1 together with two different face parts, each associated with a respective robotic character;
Fig. 3 is a flowchart illustrating the principles of the proposed procedure for automatic customization of the robot;
Fig. 4 is a flowchart illustrating a way of implementing said procedure for automatic customization of the robot, and
Fig. 5 is a flowchart illustrating an alternative way of implementing said procedure for automatic customization of the robot.

### DETAILED DESCRIPTION

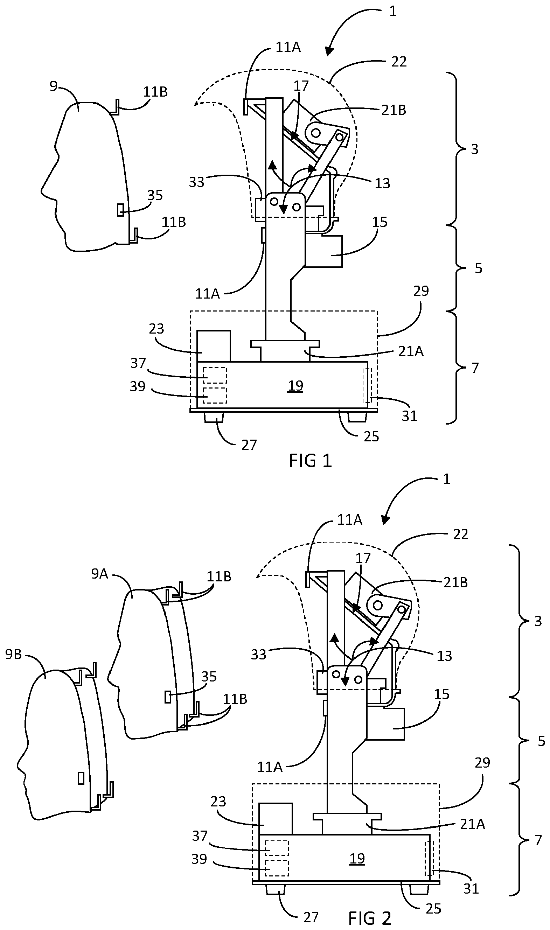

Fig. 1 illustrates a side view of a robot 1 according to an exemplary embodiment of the present invention. The robot 1 constitutes what is sometimes referred to as a robot head or talking robot head within the art of robotics.

The robot 1 comprises a first structural part forming a head 3 of the robot, a second structural part forming a neck 5 of the robot, and a third structural part forming a torso 7 of the robot.

The robot head 3 is configured for detachable connection to a face part 9, hereinafter referred to as a face mask or simply a mask. That the robot head 3 is configured for detachable connection to the face mask 9 herein means that the robot head and the mask are intended and configured to be firmly but non-permanently connected to each other, and to be releasable from each other without causing any damage to the robot head or the mask. Preferably, the connection interface for establishment of the detachable connection between the robot head 3 and the face mask 9 is configured to permit detachment of the mask 9 from the robot head 3 without the use of any tools.

In the exemplary embodiment illustrated in Fig. 1, the robot head 3 is configured for magnetic connecting to the face mask 9. To this end, the robot head 3 and the mask 9 are provided with oppositely polarized magnets 11A and 11B which, when the mask 9 is brought in the proximity of the robot head 3, cause the mask 9 into releasable magnetic engagement with the head 3 of the robot 1. Alternatively, the detachable connection between the robot head 3 and the face mask 9 may be achieved by means of a clamping or clip-on connection. For example, the robot head 3 may be provided with one or more clips allowing the face mask 9 to be brought into releasable clamped engagement with the robot head 3. In this case, the face part 9 may comprise structural parts which are adapted in dimension and structure to establish the firm but detachable connection with the robot head 3 when said structural parts of the face part 9 are brought into clamped engagement with the clips of the robot head.

The magnets 11A of the robot head 3 is attached to a rig or frame 13 of the robot 1. The rig constitutes a main structural component of the robot 1 and forms a skeleton structure serving to support and carry other components of the robot 1. When the magnets 11B of the face mask 9 are brought into magnetic engagement with the magnets 11A of the robot head 3, the face mask 9 becomes firmly but detachably attached to the robot rig 3.

The robot 1 is a projective robot comprising a projector 15, such as a pocket LED projector, for causing the display of a face image depicting a face of the robot 1 on a display surface of the face mask 9. The projector 15 is located in the neck 5 of the robot and the face image is projected onto the backside of the face mask 9, constituting said display surface, by means of mirror 17 in the back of the robot head 3. The robot head 3 and the face mask 9 thus constitutes a robot system comprising what is sometimes referred to as a rear-lit projection system in which the rear projection screen is constituted by the backside of the face mask 9.

The projected face image is typically a face animation that is controlled by an onboard computer 19 of the robot 1 by running a software animation system installed on the onboard computer. The face animation may be a 2D or 3D face animation of a human face, an animal face or the face of a fictional character. In this exemplary embodiment, the face animation is a 3D animation of an anthropomorphic face, closely resembling the face of a human being.

The face mask 9 is a 3D translucent mask, typically made of plastic, allowing the projected face animation to be viewed by a viewer standing in front of the robot 1. The design of the mask removes any enforced curvature design of the lips and of the eyes to avoid any mismatch between the projected animation and the 3D shape of the mask.

The robot 1 is further configured to exhibit an anatomically inspired two degrees of freedom neck movement. To this end, the robot 1 comprises two mechanical servos 21A, 21B configured to mimic the anatomical movement of a human head. The first servo 21A is a pan servo located in the torso 7 of the robot, which pan servo 21A is configured to rotate the robot head 3 in a horizontal plane. The second servo 21B is a tilt servo located at an upper and rear end of the robot head 3, allowing for natural tilt and nodding movements of the robot head 3. In an exemplary embodiment, the servos 21A and 21B are high-torque Dynamixel servos. The servos 21A, 21B are connected to the onboard computer 19 which controls the servos and thus the neck and head movements of the robot 1 by means of a neck control software installed on the onboard computer.

The robot 1 comprises a skull part 22 forming a cover of the robot head 3. The skull 22 may also be detachably connected to the rig 13, for example by means of magnets, for easy transportation of the robot and maintenance of robot components arranged within the robot head, which components are at least partly covered by said skull. The skull 9 is preferably white and made of plastic.

The robot 1 further comprises a built-in audio system 23 for output of audio, such as a synthetic voice of the robot. The audio system 23 may comprise an amplifier and at least one speaker, internally connected to the onboard computer 19. The use of the built-in audio system may be optional. Preferably, the onboard computer 19 is provided with a connection interface, such as a 3,5 mm audio connector port, allowing an external audio system to be connected to the robot by plugging the external audio system into the onboard computer 19 via said connection interface.

The robot 1 further comprises a base plate 25 for carrying the components of the robot. The base plate 25 is provided with rubber feet 27 or the like to ensure that the robot 1 stands steady on the underlying surface. The base plate 25, the onboard computer 19, the audio system 23, the pan servo 21A and a lower part of the robot rig 13 are enclosed by a housing 29, visually resembling a torso of the robot. The housing 29 is preferably detachable from the base plate 25 or provided with one or more openings to provide easy access to the onboard computer 19 and the other components arranged within the housing.

The robot 1 is further provided with connectivity for connection to one or more network devices via a network, such as the internet. For example, the onboard computer 19 may be provided with an Ethernet connection interface allowing an Ethernet cable to be plugged into the computer to allow the robot 1 to communicate and exchange information with external network devices. The robot 1 may also be configured to support connection of various hardware components and peripherals to the robot, e.g. via USB connectors of the onboard computer 19. Such external hardware components and peripherals may include an external monitor, a keyboard and a computer mouse but it may also include various sensors for adding functionalities to the robot 1. For example, the robot 1 may be configured to support connection of different image sensors and microphones. The robot 1 may contain software for facial recognition, facial expression recognition and gesture recognition as well as face and body tracking, and be configured to provide any or all of these functionalities (skills) based on image information recorded by an external image sensor connected to the onboard computer 19, such as a depth camera recording 3D images of the surroundings. Likewise, the robot may contain software for e.g. voice recognition and speech interpretation, and be configured to provide any or all of these functionalities based on audio information recorded by an external microphone. A connection interface 31 for connection of a network cable and external hardware equipment to the robot 1 is schematically illustrated by a dashed box in Fig. 1. In other embodiments (not shown), the robot 1 may comprise one or more integrated image sensors and microphones to provide any or all of the above mentioned functionalities.

The robot 1 is configured to exhibit a robot identity and a robot personality which, at least to some extent, are governed by software run on the onboard computer 19. This means that the robot 1 may select which identity and/or which personality to exhibit by executing different program code sequences that are stored in or downloadable to the onboard computer 19.

The above described face animation that is projected onto the display surface of the face mask 9 is a software-controlled robot characteristic forming part of what is herein referred to as the robot identity. Another software-controlled robot characteristic forming part of the robot identity is the voice of the robot, output by the built-in audio system 23 or an external audio system connected to the onboard computer 19 of the robot 1.

The behaviour of the robot 1 is a software-controlled robot characteristic forming part of what is herein referred to as the robot personality. The behaviour of the robot 1 includes the social behaviour of the robot 1, i.e. the way the robot interacts with humans or other automated machines, and the movement pattern of the robot, i.e. the way the robot moves the eyes of the animated face and the head 3 of the robot. The behaviour of the robot 1 also includes the skills of the robot, including its interactive skills, its knowledge base, and its capability of providing answers to questions.

In accordance with the principles of the present invention, the robot 1 is configured to automatically adapt the robot identity and/or the robot personality based on the face part or mask 9 currently being connected to the robot head 3, which means that the robot 1 is configured to adapt said robot identity and/or robot personality through execution of a program code sequence which is automatically selected in dependence of the face mask currently being connected to the robot head 3.

To this end, the robot 1 may comprise a communication unit 33 for receiving data from the face mask 9 currently being connected to the robot head 3. The data received from the face mask may be used by the robot 1 to achieve said face-mask dependent adaption of the robot identity and/or personality.

In this exemplary embodiment, the communication unit 33 comprises a sensor arrangement for automatic identification of the face mask 9. The sensor arrangement is a radio frequency identification (RFID) reader, configured for wireless communication with a data carrier 35 in form of an RFID tag, attached to the face mask 9. The RFID reader is connected to the onboard computer 19 and configured to receive information from the data carrier 35 allowing the robot 1 to automatically identify the face mask 9 when the face mask is connected to or brought in the proximity of the robot head 3.

The data that is read from the RFID tag 35 by the RFID reader may be a face part identification number, hereinafter referred to as a "mask ID". The onboard computer 19 uses the mask ID to identify one or more program code sequences which, when run by the onboard computer 19, causes the robot 1 to exhibit a certain robot identity and/or a certain robot personality, which robot identity and/or robot personality hence is automatically selected based on the face mask 9 identified by the sensor arrangement 33.

For example, the onboard computer 19 may store a look-up table comprising a plurality of mask IDs, wherein each mask ID is associated with a certain robotic character having a certain robot identity and/or robot personality, e.g. a certain face animation, a certain voice, a certain behaviour and/or a certain set of skills. When a new mask ID is read by the RFID reader, the onboard computer 19 executes a program code sequence causing the robot 1 to exhibit the robot identity and/or robot personality that is associated with the mask ID in said look-up table. The look-up table and the program code sequences causing the robot to exhibit different robot identities and/or different robot personalities in dependence of the currently connected face mask may be stored in an internal memory 37 of the onboard computer 19, from which the program code sequences may be executed by a processor 39 of the onboard computer 19.

The automatic face-part dependent adaption of the robot 1 allows a user of the robot to change the character of the robot 1 completely, simply by changing the face mask of the robot. Consequently, it is contemplated that a user may be provided with a robot system according to the present disclosure, which robot system comprises a robot as described above and at least two mutually different face parts associated with different robotic characters, allowing the user to switch between said robotic characters by changing the face mask currently being connected to the robot head for the other face mask.

Of course, in order for the robot 1 to know which robot character to turn into when one of the face masks 9A and 9B is attached to the robot head 3, the association between each face mask and a corresponding robotic character needs first to be created. The creation of robotic characters, i.e. the programming of face animations, voices, behaviours and skills, and the assignment of a particular robotic character to a particular face mask, i.e. the creation of an association between a face mask and a robotic character to be presented when said face mask is attached to the robot 1, may be made prior to delivery of the robot system to the user, and/or be made by the user himself. Preferably but not necessarily, upon delivery of the robot system to a user, each face mask delivered with the robot system is associated with a robotic character which is presented to the user when the face mask is connected to the robot head 3. However, the robot system may advantageously comprise a software development kit allowing the user to alter or add robotic characters, and associate the robotic characters with a face mask of their choice. In this way, the user may create a robotic character having a desired face animation, voice, behaviour and set of skills, and associate the robotic character with a certain face mask which, whenever said face mask is connected to the robot 1, will turn the thus created robotic character to life. Preferably, the robot system further comprises a software application, such as an online market place, allowing users to upload robotic characters, each developed and intended for use with a particular face mask or potentially two or more face masks having similar design. In this way, other users having a corresponding face mask can download robotic characters intended for and specifically adapted to that face mask, created by other users.

Fig. 2 illustrates a robot system comprising a robot 1, a first face mask 9A associated with a first robotic character, and a second face mask 9B associated with a second robotic character.

In one exemplary scenario, one of the face masks 9A, 9B may be associated with a male robotic character having a masculine face and voice (i.e. a male robotic identity), while the other face mask may be associated with a female robotic character having a feminine face and voice (i.e. a female robotic identity).

In another exemplary scenario one of the face masks 9A, 9B may be associated with an adult robotic character having an adult face and voice, while the other face mask may be associated with a baby-like robotic character having a baby-like face and voice. Of course, the adult robotic character may also be pre-programmed to exhibit an adult-type of behaviour and skills that are typically possessed by an adult person, i.e. to exhibit an adult robotic personality. Likewise, the baby-like robotic character may be pre-programmed to exhibit a baby-like behaviour and skills or a lack of skills that are typical for a baby, i.e. to exhibit a baby-like robotic personality.

In yet another exemplary scenario in which the robot system is used for education or amusement, each face mask 9A, 9B of the system may be associated with a historical person, such as Albert Einstein, Napoleon, William Shakespeare or Aristotle. By connecting a face mask associated with e.g. Albert Einstein to the robot head 3, the robot 1 will automatically "become" Albert Einstein by causing the display of a face image depicting Albert Einstein, speaking with a voice resembling the voice of Albert Einstein, behaving like Albert Einstein, being capable of answering questions of interest to Albert Einstein, etc.

In yet another exemplary scenario in which the robot is used for providing telepresence of remote meeting participants during e.g. a business meeting, each face mask 9A, 9B may be associated with a remote meeting participant not physically present at the meeting. The meeting administrator could then attach a face mask associated with a remote meeting participant to the robot head 3, whereby the robot 1 would "turn into" said remote meeting participant by automatically causing the display of a face image depicting or representing said participant on the display surface of the face mask 9A, 9B. For example, the robot 1 may be configured to cause the display of a real time or near real time video of the face of said remote meeting participant as said face image, which video may be captured by a video camera collocated with the remote meeting participant. Alternatively, the robot may be configured to cause the display of a face animation, preferably a 3D face animation, of said remote meeting participant as said face image, which face animation is caused to mimic the facial expressions of the remote meeting participant. This may be achieved by the robot 1 or a network device to which the robot is communicatively connected through image processing of said video of the face of the remote meeting participant, e.g. by using known techniques for detection of faces, direction of gaze, emotions, speech-related face movements etc. Preferably, in this telepresence scenario, the robot 1 is also configured to output or reproduce speech of the remote meeting participant, which speech may be recorded by a microphone collocated with the remote meeting participant.

In yet another exemplary scenario, the face masks 9A, 9B may be associated with different skills or sets of skills of the robot 1. For example, each of the face masks 9A, 9B may be associated with any of or any combination of the skill of providing telepresence of a remote person, the skill of singing and the skill of telling stories. The robot 1 may then be configured to adapt its skills based on the face part currently being connected to the robot head. The robot 1 may for example be configured to run different applications ("apps") in dependence of the face mask currently being connected to the robot head 3. Thus, by connecting a "telepresence face part" to the robot head 3 the user could trigger the robot 1 to run a telepresence application, and by connecting a "singing face part" to the robot head 3, the user could trigger the robot to run an application causing the robot to sing songs, etc.

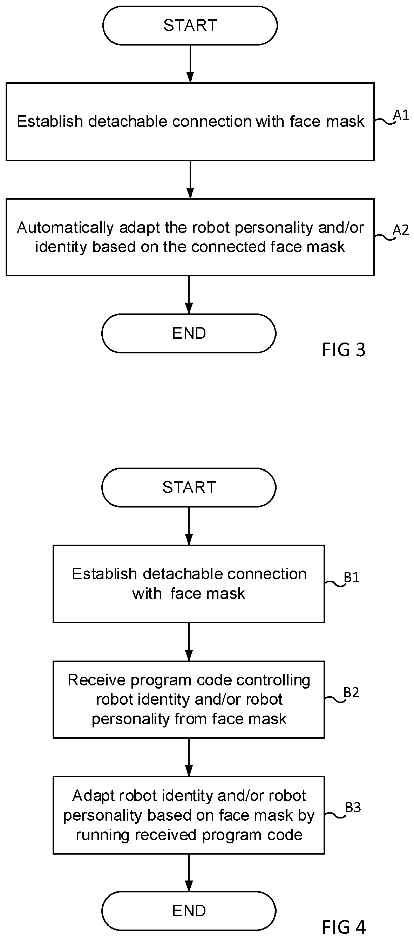

A method for customizing the robot 1 according to the principles of the present disclosure will now be described with reference to Figs. 3 and 4. Simultaneous reference will be made to the components of the robot systems illustrated in Figs. 1 and 2.

The method of customizing the robot 1 is a computer-implemented method which is performed by the robot 1, possibly in collaboration with one or more network devices to which the robot 1 is communicatively connectable. Unless stated otherwise, the method steps performed by the robot 1 is performed through execution by the processor 39 of a computer program stored in the memory 37 of the onboard computer 19.

Fig. 3 is a flowchart illustrating the principles of the proposed procedure for customization of the robot 1.

In a first step A1, a detachable connection is established between the robot head 3 and the face mask 9. This step, of course, is not performed through execution of a computer program. Instead, the detachable connection with the face part 9 is established by the robot 1 by means of a connection interface for firm but detachable connection of the robot head 3 to the face mask 9, such as the magnetic interface formed by the magnets 11A shown in Figs. 1 and 2.

In a second step A2, the robot 1 automatically adapts the robot identity and/or personality based on the face mask 9 currently connected to the robot head 3.

Fig. 4 is a flowchart illustrating a way of implementing the principles of the proposed procedure for customization of the robot 1, illustrated in Fig. 3.

In a first step B1, corresponding to step A1 in Fig. 3, the robot establishes a detachable connection with the face mask 9.

In a second step B2, the program code which, when executed by the robot, causes the robot to exhibit a certain robot identity and/or robot personality is received directly from the face mask 9. As mentioned above, the program code may be received by a data receiving unit of the robot 1, e.g. a data receiving unit in form of an SD card reader comprised in the communication unit 33.

In a third step B3, the robot identity and/or personality is adapted to or at least adapted based on the face mask 9 currently being connected to the robot head 3 through execution of the program code retrieved in step B2.

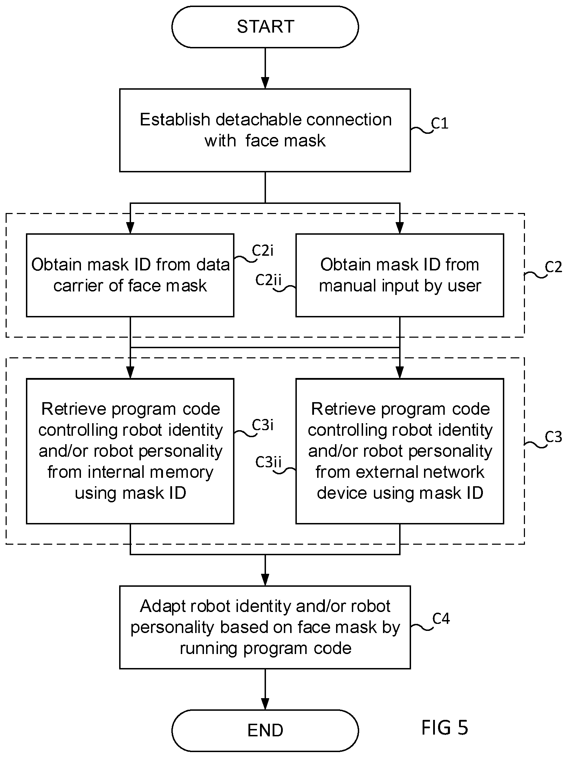

Fig. 5 is a flowchart illustrating an alternative way of implementing the principles of the proposed procedure for customization of the robot 1, illustrated in Fig. 3.

In a first step C1, corresponding to step A1 in Fig. 3, the robot establishes a detachable connection with the face mask 9.

In a second step C2, a mask ID being an identifier of the face mask 9 currently connected to the robot head 3 is obtained by the robot 1. The mask ID may be obtained from a data carrier of the face mask 9 (step C2i) by means of a sensor arrangement of the robot, such as an RFID reader, or obtained from the user of the robot 1 through manual input of the mask ID via a user interface of the robot system (step C2ii).

In a third step C3, the program code which, when executed by the robot, causes the robot to exhibit a certain robot identity and/or robot personality is retrieved by the robot using the mask ID obtained in step C2. The program code may be retrieved from an internal memory 37 of the robot (step C3i) or from an external network device to which the robot 1 is communicatively connectable (step C3ii).

In a fourth step C4, the robot identity and/or personality is adapted to or at least adapted based on the face mask 9 currently being connected to the robot head 3 through execution of the program code retrieved in step C3.

## Claims

1. A robot (1) configured to exhibit a robot personality at least partly through execution of computer-readable program code, the robot comprising a robot head (3) configured for connection to a face part (9; 9A, 9B) including a display surface, the robot being configured to cause the display of a face image depicting a face of said robot on said display surface, said robot head (3) is configured for detachable connection to said face part to allow detachable connection of different face parts (9; 9A, 9B) to the robot head, the robot (1) being configured to automatically adapt said robot personality based on the face part currently being connected to the robot head (3), **characterised in that**
the robot (1) further comprising a data receiving unit configured to receive, from the face part (9; 9A, 9B) being brought in the proximity of, or currently connected to, the robot head (3), a program code sequence stored on a data carrier of the face part, and the robot being configured to automatically adapt the robot personality through execution of said program code sequence received from the face part being brought in the proximity of, or currently connected to the robot head.

2. The robot (1) of claim 1, wherein the robot is configured to adapt said robot personality through execution of a program code sequence that is automatically selected in dependence of the face part (9; 9A, 9B) currently being connected to the robot head (3).

3. The robot (1) of claim 1 or 2, further comprising a communication unit (33) configured to receive data from the face part (9; 9A, 9B) currently being connected to the robot head (3), the robot being configured to use said data in the adaption of the personality.

4. The robot (1) of claim 3, wherein the communication unit (33) comprises a sensor arrangement for automatic identification of the face part (9; 9A, 9B) currently being connected to the robot head.

5. The robot (1) of any of the preceding claims, wherein the automatic adaption of said robot personality involves adaption of at least one robot characteristic selected from the group consisting of said face image depicting a face of the robot, a voice of the robot, a behaviour of the robot and a skill of the robot.

6. The robot (1) of any of the preceding claims, wherein said display surface is a 3D display surface and said face image is a face animation adapted to the shape of said 3D display surface.

7. The robot (1) of any of the preceding claims, wherein said display surface is a projection surface of a translucent mask constituting or forming part of said face part (9; 9A, 9B), the robot further comprising a projector (15) for projecting said face image onto said projection surface.

8. The robot (1) of any of the claims 1 to 6, wherein said display surface is a display surface of an electronic or fibre-optic display unit constituting or forming part of said face part (9; 9A, 9B), the robot being configured to cause display of said image on said electronic or fibre-optic display surface.

9. The robot (1) of any of the preceding claims, wherein the robot is configured to provide telepresence of a remote user at a location of the robot.

10. The robot (1) of claim 10, wherein the robot is configured to provide telepresence to one of a plurality of remote users, the robot being configured to select one of said remote users based on the face part currently being connected to the robot head, and to cause at least said face image depicting a face of the robot to be selected based on the selection of the remote user.

11. A robot system comprising:
a robot (1) configured to exhibit a robot personality at least partly through execution of computer-readable program code, and
at least one a face part (9; 9A, 9B) comprising a display surface, the robot comprising a robot head (3) configured for connection to said face part (9; 9A, 9B), wherein the robot (1) is configured to cause the display of a face image depicting a face of said robot on said display surface, the robot head (3) and the face part (9; 9A, 9B) are configured for detachable connection to each other to allow detachable connection of different face parts to the robot head, the robot (1) being configured to automatically adapt said robot personality based on the face part (9; 9A, 9B) currently being connected to the robot head (3), **characterised in that**
the face part (9; 9A, 9B) further comprising a data carrier storing a program code sequence for automatically adapting the robot personality of the robot based on said face part,
the robot further comprising a data receiving unit configured to receive, from the face part currently connected to the robot head, and the robot being configured to automatically adapt the robot personality through execution of said program code sequence received from the face.

12. A face part (9; 9A, 9B) configured for connection to a robot head (3) of a robot (1) according to claim 4, the face part comprising a display surface on which the robot is configured to cause the display of a face image depicting a face of said robot, the face part being configured for detachable connection to the robot head to allow detachable connection of different face parts to the robot head, wherein said face part (9; 9A, 9B) comprises a data carrier (35) allowing the robot (1) to automatically identify the face part when connected to the robot head (3), **characterised in that**
said face part (9; 9A; 9B) comprises a data carrier storing a program code sequence for automatically adapting the robot personality of the robot based on said face part, the face part being configured to transmit said program code sequence to the robot when the face part is brought in the proximity of, or connected to, the robot head.

13. The face part (9; 9A, 9B) of claim 12, wherein said data carrier (35) is configured to transfer a face part identifier to the robot (1) when the face part is brought in the proximity of, or connected to, the robot head (3).

14. A method for customizing a robot (1) configured to exhibit a robot personality at least partly through execution of computer-readable program code, the robot comprising a robot head (3) configured for connection to a face part (9; 9A, 9B) including a display surface on which the robot is configured to display a face image depicting a face of said robot, wherein the robot head (3) is configured for detachable connection to said face part (9; 9A, 9B) to allow detachable connection of different face parts to the robot head, **characterised by**
receiving a program code sequence from the face part (9; 9A, 9B) currently connected to the robot head (3), and automatically adapting said robot personality based on the face part (9; 9A, 9B) currently being connected to the robot head (3) through execution of said program code sequence received from the face part (9; 9A, 9B).

15. A computer program for customizing a robot (1) configured to exhibit a robot personality at least partly through execution of computer-readable program code, the robot comprising a robot head (3) configured for connection to a face part (9; 9A, 9B) including a display surface on which the robot is configured to display a face image depicting a face of said robot, wherein the robot head (3) is configured for detachable connection to said face part (9; 9A, 9B) to allow detachable connection of different face parts to the robot head, wherein the computer program is **characterised in that** it comprises computer-readable program code which when executed causes said robot receiving a program code sequence from the face part (9; 9A, 9B) currently connected to the robot head (3), and said robot personality to be automatically adapted based on the face part (9; 9A, 9B) currently being connected to the robot head (3) through execution of said program code sequence received from the face part (9; 9A, 9B).

## Patentansprüche

1. Roboter (1), der konfiguriert ist, durch Ausführen eines computerlesbaren Programmcodes mindestens teilweise eine Roboterpersönlichkeit aufzuweisen, wobei der Roboter einen Roboterkopf (3) umfasst, der für die Verbindung mit einem Gesichtsteil (9; 9A, 9B) konfiguriert ist, der eine Anzeigefläche umfasst, der Roboter konfiguriert ist, die Anzeige eines Gesichtsbildes zu bewirken, das ein Gesicht des Roboters auf der Anzeigefläche darstellt, wobei der Roboterkopf (3) für eine lösbare Verbindung mit dem Gesichtsteil konfiguriert ist, um eine lösbare Verbindung von verschiedenen Gesichtsteilen (9; 9A, 9B) mit dem Roboterkopf zu ermöglichen und der Roboter (1) konfiguriert ist, die Roboterpersönlichkeit basierend auf dem Gesichtsteil, der gegenwärtig mit dem Roboterkopf (3) verbunden ist, automatisch anzupassen, **dadurch gekennzeichnet, dass** der Roboter (1) ferner eine Datenempfangseinheit umfasst, die konfiguriert ist, von dem Gesichtsteil (9; 9A, 9B), das in die Nähe des Roboterkopfes (3) gebracht wird oder gegenwärtig damit verbunden ist, eine Programmcodesequenz zu empfangen, die auf einem Datenträger des Gesichtsteils gespeichert ist, und der Roboter konfiguriert ist, die Roboterpersönlichkeit durch Ausführen der Programmcodesequenz, die von dem Gesichtsteil empfangen wird, der in die Nähe des Roboterkopfes gebracht wird oder gegenwärtig damit verbunden ist, automatisch anzupassen.

2. Roboter (1) nach Anspruch 1, wobei der Roboter konfiguriert ist, die Roboterpersönlichkeit durch Ausführen einer Programmcodesequenz anzupassen, die in Abhängigkeit von dem Gesichtsteil (9; 9A, 9B) automatisch ausgewählt wird, der gegenwärtig mit dem Roboterkopf (3) verbunden ist.

3. Roboter (1) nach Anspruch 1 oder 2 ferner umfassend eine Kommunikationseinheit (33), die konfiguriert ist, Daten von dem Gesichtsteil (9; 9A, 9B) zu empfangen, der gegenwärtig mit dem Roboterkopf (3) verbunden ist, wobei der Roboter konfiguriert ist, die Daten bei der Anpassung der Persönlichkeit zu verwenden.

4. Roboter (1) nach Anspruch 3, wobei die Kommunikationseinheit (33) eine Sensoranordnung zur automatischen Identifizierung des gegenwärtig mit dem Roboterkopf verbundenen Gesichtsteils (9; 9A, 9B) umfasst.

5. Roboter (1) nach einem der vorstehenden Ansprüche, wobei die automatische Anpassung der Roboterpersönlichkeit die Anpassung von mindestens einer Robotereigenschaft umfasst, die ausgewählt ist aus der Gruppe bestehend aus dem Gesichtsbild, das ein Gesicht des Roboters darstellt, einer Stimme des Roboters, einem Verhalten des Roboters und einer Fähigkeit des Roboters.

6. Roboter (1) nach einem der vorstehenden Ansprüche, wobei die Anzeigefläche eine 3D-Anzeigefläche ist und das Gesichtsbild eine Gesichtsanimation ist, die an die Form der 3D-Anzeigefläche angepasst ist.

7. Roboter (1) nach einem der vorstehenden Ansprüche, wobei die Anzeigefläche eine Projektionsfläche einer durchsichtigen Maske ist, die einen Teil des Gesichtsteils (9; 9A, 9B) darstellt oder bildet, und der Roboter ferner einen Projektor (15) zum Projizieren des Gesichtsbildes auf die Projektionsfläche umfasst.

8. Roboter (1) nach einem der Ansprüche 1 bis 6, wobei die Anzeigefläche eine Anzeigefläche einer elektronischen oder faseroptischen Anzeigeeinheit ist, die einen Teil des Gesichtsteils (9; 9A, 9B) darstellt oder bildet, und der Roboter konfiguriert ist, die Anzeige des Bildes auf der elektronischen oder faseroptischen Anzeigefläche zu bewirken.

9. Roboter (1) nach einem der vorstehenden Ansprüche, wobei der Roboter konfiguriert ist, eine Telepräsenz eines entfernten Benutzers an einem Standort des Roboters zu ermöglichen.

10. Roboter (1) nach Anspruch 10, wobei der Roboter konfiguriert ist, eine Telepräsenz für einen von mehreren entfernten Benutzern bereitzustellen, und der Roboter konfiguriert ist, einen der entfernten Benutzer basierend auf dem Gesichtsteil, der gegenwärtig mit dem Roboterkopf verbunden ist, auszuwählen und zu bewirken, dass mindestens das Gesichtsbild, das ein Gesicht des Roboters darstellt, basierend auf der Auswahl des entfernten Benutzers ausgewählt wird.

11. Robotersystem, umfassend:
einen Roboter (1), der konfiguriert ist, durch Ausführen von computerlesbarem Programmcode mindestens teilweise eine Roboterpersönlichkeit aufzuweisen, und
mindestens einen Gesichtsteil (9; 9A, 9B), der eine Anzeigefläche umfasst, wobei der Roboter einen Roboterkopf (3) umfasst, der zur Verbindung mit dem Gesichtsteil (9; 9A, 9B) konfiguriert ist, wobei der Roboter (1) konfiguriert ist, die Anzeige eines Gesichtsbildes zu bewirken, das ein Gesicht des Roboters auf der Anzeigefläche darstellt, der Roboterkopf (3) und der Gesichtsteil (9; 9A, 9B) für eine lösbare Verbindung miteinander konfiguriert sind, um eine lösbare Verbindung verschiedener Gesichtsteile mit dem Roboterkopf zu ermöglichen, und der Roboter (1) konfiguriert ist, die Roboterpersönlichkeit basierend auf dem Gesichtsteil (9; 9A, 9B), der gegenwärtig mit dem Roboterkopf (3) verbunden ist, automatisch anzupassen, **dadurch gekennzeichnet, dass**
der Gesichtsteil (9; 9A, 9B) ferner einen Datenträger umfasst, der eine Programmcodesequenz zum automatischen Anpassen der Roboterpersönlichkeit des Roboters basierend auf dem Gesichtsteil speichert,
der Roboter ferner eine Datenempfangseinheit umfasst, die konfiguriert ist, von dem Gesichtsteil, der gegenwärtig mit dem Roboterkopf verbunden ist, Daten zu empfangen, und der Roboter konfiguriert ist, die Roboterpersönlichkeit durch Ausführen der von dem Gesichtsteil empfangenen Programmcodesequenz automatisch anzupassen.

12. Gesichtsteil (9; 9A, 9B), der zur Verbindung mit einem Roboterkopf (3) eines Roboters (1) nach Anspruch 4 konfiguriert ist, wobei der Gesichtsteil eine Anzeigefläche umfasst, auf welcher der Roboter konfiguriert ist, die Anzeige eines Gesichtsbildes zu bewirken, das ein Gesicht des Roboters darstellt, und der Gesichtsteil für eine lösbare Verbindung mit dem Roboterkopf konfiguriert ist, um eine lösbare Verbindung verschiedener Gesichtsteile mit dem Roboterkopf zu ermöglichen, wobei der Gesichtsteil (9; 9A, 9B) einen Datenträger (35) umfasst, der es dem Roboter (1) ermöglicht, den Gesichtsteil automatisch zu identifizieren, wenn er mit dem Roboterkopf (3) verbunden ist, **dadurch gekennzeichnet, dass**
der Gesichtsteil (9; 9A; 9B) einen Datenträger umfasst, der eine Programmcodesequenz zur automatischen Anpassung der Roboterpersönlichkeit des Roboters basierend auf dem Gesichtsteil speichert, wobei der Gesichtsteil konfiguriert ist, die Programmcodesequenz an den Roboter zu senden, wenn der Gesichtsteil in die Nähe des Roboterkopfes gebracht oder damit verbunden wird.

13. Gesichtsteil (9; 9A, 9B) nach Anspruch 12, wobei der Datenträger (35) konfiguriert ist, eine Gesichtsteilkennung an den Roboter (1) zu senden, wenn der Gesichtsteil in die Nähe des Roboterkopfes (3) gebracht oder damit verbunden wird.

14. Verfahren zum Anpassen eines Roboters (1), der konfiguriert ist, durch Ausführen von computerlesbarem Programmcode mindestens teilweise eine Roboterpersönlichkeit aufzuweisen, wobei der Roboter einen Roboterkopf (3) umfasst, der zur Verbindung mit einem Gesichtsteil (9; 9A, 9B) konfiguriert ist, das eine Anzeigefläche umfasst, auf welcher der Roboter konfiguriert ist, ein Gesichtsbild anzuzeigen, das ein Gesicht des Roboters darstellt, wobei der Roboterkopf (3) für eine lösbare Verbindung mit dem Gesichtsteil (9; 9A, 9B) konfiguriert ist, um eine lösbare Verbindung von verschiedenen Gesichtsteilen mit dem Roboterkopf zu ermöglichen, **gekennzeichnet durch**
Empfangen einer Programmcodesequenz von dem Gesichtsteil (9; 9A, 9B), der gegenwärtig mit dem Roboterkopf (3) verbunden ist, und automatisches Anpassen der Roboterpersönlichkeit basierend auf dem Gesichtsteil (9; 9A, 9B), der gegenwärtig mit dem Roboterkopf (3) verbunden ist, durch Ausführen der von dem Gesichtsteil (9; 9A, 9B) empfangenen Programmcodesequenz.

15. Computerprogramm zum Anpassen eines Roboters (1), der konfiguriert ist, durch Ausführen von computerlesbarem Programmcode mindestens teilweise eine Roboterpersönlichkeit aufzuweisen, wobei der Roboter einen Roboterkopf (3) umfasst, der für die Verbindung mit einem Gesichtsteil (9; 9A, 9B) konfiguriert ist, das eine Anzeigefläche umfasst, auf welcher der Roboter konfiguriert ist, ein Gesichtsbild anzuzeigen, das ein Gesicht des Roboters darstellt, wobei der Roboterkopf (3) für eine lösbare Verbindung mit dem Gesichtsteil (9; 9A, 9B) konfiguriert ist, um eine lösbare Verbindung von verschiedenen Gesichtsteilen mit dem Roboterkopf zu ermöglichen, wobei das Computerprogramm **dadurch gekennzeichnet ist, dass** es computerlesbaren Programmcode umfasst, der bei Ausführung bewirkt, dass der Roboter eine Programmcodesequenz von dem Gesichtsteil (9; 9A, 9B) empfängt, der gegenwärtig mit dem Roboterkopf (3) verbunden ist, und die Roboterpersönlichkeit basierend auf dem Gesichtsteil (9; 9A, 9B), der gegenwärtig mit dem Roboterkopf (3) verbunden ist, durch Ausführen der von dem Gesichtsteil (9; 9A, 9B) empfangenen Programmcodesequenz automatisch angepasst wird.

## Revendications

1. Robot (1) configuré pour présenter une personnalité de robot au moins en partie grâce à l'exécution d'un code de programme lisible par ordinateur, le robot comprenant une tête de robot (3) configurée pour être raccordée à une partie faciale (9 ; 9A, 9B) comprenant une surface d'affichage, le robot étant configuré pour provoquer l'affichage d'une image faciale représentant un visage dudit robot sur ladite surface d'affichage, ladite tête de robot (3) est configurée pour un raccordement amovible à ladite partie faciale afin de permettre un raccordement amovible de différentes parties faciales (9 ; 9A, 9B) à la tête de robot, le robot (1) étant configuré pour adapter automatiquement ladite personnalité de robot sur la base de la partie faciale actuellement raccordée à la tête de robot (3), **caractérisé en ce que**
le robot (1) comprend en outre une unité de réception de données configurée pour recevoir, de la partie faciale (9 ; 9A, 9B) amenée à proximité de, ou actuellement raccordée à, la tête de robot (3), une séquence de code de programme mémorisée sur un support de données de la partie faciale, et le robot étant configuré pour adapter automatiquement la personnalité du robot grâce à l'exécution de ladite séquence de code de programme reçue de la partie faciale étant amenée à proximité de, ou actuellement raccordée à la tête du robot.

2. Robot (1) selon la revendication 1, dans lequel le robot est configuré pour adapter ladite personnalité de robot grâce à l'exécution d'une séquence de code de programme qui est automatiquement sélectionnée en fonction de la partie faciale (9 ; 9A, 9B) actuellement raccordée à la tête de robot (3).

3. Robot (1) selon la revendication 1 ou 2, comprenant en outre une unité de communication (33) configurée pour recevoir des données de la partie faciale (9 ; 9A, 9B) actuellement raccordée à la tête du robot (3), le robot étant configuré pour utiliser lesdites données dans le cadre de l'adaptation de la personnalité.

4. Robot (1) selon la revendication 3, dans lequel l'unité de communication (33) comprend un agencement de capteurs pour l'identification automatique de la partie faciale (9 ; 9A, 9B) actuellement raccordée à la tête du robot.

5. Robot (1) selon une quelconque des revendications précédentes, dans lequel l'adaptation automatique de ladite personnalité de robot implique l'adaptation d'au moins une caractéristique de robot sélectionnée dans le groupe constitué de ladite image faciale représentant un visage du robot, une voix du robot, un comportement du robot et une compétence du robot.

6. Robot (1) selon une quelconque des revendications précédentes, dans lequel ladite surface d'affichage est une surface d'affichage 3D et ladite image faciale est une animation de visage adaptée à la forme de ladite surface d'affichage 3D.

7. Robot (1) selon une quelconque des revendications précédentes, dans lequel ladite surface d'affichage est une surface de projection d'un masque translucide constituant ou faisant partie de ladite partie faciale (9 ; 9A, 9B), le robot comprenant en outre un projecteur (15) pour projeter ladite image faciale sur ladite surface de projection.

8. Robot (1) selon une quelconque des revendications 1 à 6, dans lequel ladite surface d'affichage est une surface d'affichage d'une unité d'affichage électronique ou à fibre optique constituant ou faisant partie de ladite partie faciale (9 ; 9A, 9B), le robot étant configuré pour provoquer l'affichage de ladite image sur ladite surface d'affichage électronique ou à fibre optique.

9. Robot (1) selon une quelconque des revendications précédentes, dans lequel le robot est configuré pour assurer la téléprésence d'un utilisateur distant à un emplacement du robot.

10. Robot (1) selon la revendication 10, dans lequel le robot est configuré pour fournir une téléprésence à un d'une pluralité d'utilisateurs distants, le robot étant configuré pour sélectionner un desdits utilisateurs distants sur la base de la partie faciale actuellement raccordée à la tête de robot, et pour amener au moins ladite image faciale représentant un visage du robot à être sélectionnée sur la base de la sélection de l'utilisateur distant.

11. Système robotique comprenant :
un robot (1) configuré pour présenter une personnalité de robot au moins en partie grâce à l'exécution d'un code de programme lisible par ordinateur, et
au moins une partie faciale (9 ; 9A, 9B) comprenant une surface d'affichage, le robot comprenant une tête de robot ( 3) configurée pour être raccordée à ladite partie faciale (9 ; 9A, 9B), dans lequel le robot (1) est configuré pour provoquer l'affichage d'une image faciale représentant un visage dudit robot sur ladite surface d'affichage, la tête de robot (3) et la partie faciale (9 ; 9A, 9B) sont configurées pour un raccordement amovible l'une à l'autre afin de permettre un raccordement amovible de différentes parties faciales à la tête de robot, le robot (1) étant configuré pour adapter automatiquement ladite personnalité du robot sur la base de la partie faciale (9 ; 9A, 9B) actuellement raccordée à la tête de robot (3), **caractérisé en ce que** la partie faciale (9 ; 9A, 9B) comprenant en outre un support de données mémorisant une séquence de code de programme pour adapter automatiquement la personnalité du robot du robot sur la base de ladite partie faciale,
le robot comprenant en outre une unité de réception de données configurée pour recevoir, depuis la partie faciale actuellement raccordée à la tête du robot, et le robot étant configuré pour adapter automatiquement la personnalité du robot par l'exécution de ladite séquence de code de programme reçue du visage.

12. Partie faciale (9 ; 9A, 9B) configurée pour être raccordée à une tête de robot (3) d'un robot (1) selon la revendication 4, la partie faciale comprenant une surface d'affichage sur laquelle le robot est configuré pour provoquer l'affichage d'une image faciale représentant un visage dudit robot, la partie faciale étant configurée pour un raccordement amovible à la tête de robot afin de permettre un raccordement amovible de différentes parties faciales à la tête de robot, dans laquelle ladite partie faciale (9 ; 9A, 9B) comprend un support de données (35) permettant au robot (1) d'identifier automatiquement la partie faciale lorsqu'il est raccordé à la tête de robot (3), **caractérisé en ce que**
ladite partie faciale (9 ; 9A ; 9B) comprend un support de données mémorisant une séquence de code de programme pour adapter automatiquement la personnalité de robot du robot sur la base de ladite partie de visage, la partie de visage étant configurée pour transmettre ladite séquence de codes de programme au robot lorsque la partie faciale est amenée à proximité ou raccordée à la tête du robot.

13. Partie faciale (9 ; 9A, 9B) selon la revendication 12, dans laquelle ledit support de données (35) est configuré pour transférer un identifiant de partie faciale au robot (1) lorsque la partie faciale est amenée à proximité de, ou raccordée à la tête du robot (3).

14. Procédé de personnalisation d'un robot (1) configuré pour présenter une personnalité de robot au moins en partie grâce à l'exécution d'un code de programme lisible par ordinateur, le robot comprenant une tête de robot (3) configurée pour être raccordée à une partie faciale (9 ; 9A, 9B) comprenant une surface d'affichage sur laquelle le robot est configuré pour afficher une image faciale représentant un visage dudit robot, dans lequel la tête de robot (3) est configurée pour un raccordement amovible à ladite partie faciale (9 ; 9A, 9B) pour permettre un raccordement amovible de différents visages à la tête du robot, **caractérisé par**
la réception d'une séquence de code de programme de la partie faciale (9 ; 9A, 9B) actuellement raccordée à la tête de robot (3), et adapter automatiquement ladite personnalité de robot sur la base de la partie faciale (9 ; 9A, 9B) actuellement raccordée à la tête de robot (3) grâce à l'exécution de ladite séquence de code de programme reçue de la partie faciale (9 ; 9A, 9B).

15. Programme informatique pour personnaliser un robot (1) configuré pour présenter une personnalité de robot au moins en partie grâce à l'exécution d'un code de programme lisible par ordinateur, le robot comprenant une tête de robot (3) configurée pour être raccordée à une partie faciale (9 ; 9A, 9B) comprenant une surface d'affichage sur laquelle le robot est configuré pour afficher une image faciale représentant un visage dudit robot, dans lequel la tête de robot (3) est configurée pour un raccordement amovible à ladite partie faciale (9 ; 9A, 9B) pour permettre un raccordement amovible de différentes parties faciales au robot, dans lequel le programme informatique est **caractérisé en ce qu'**il comprend un code de programme lisible par ordinateur qui, lorsqu'il est exécuté, amène ledit robot à recevoir une séquence de code de programme de la partie faciale (9 ; 9A, 9B) actuellement raccordée à la tête de robot (3), et ladite personnalité du robot à adapter automatiquement sur la base de la partie faciale (9 ; 9A, 9B) actuellement raccordée à la tête de robot (3) par l'exécution de ladite séquence de code de programme reçue de la partie faciale (9 ; 9A, 9B).
